Europäisches Patentamt

European Patent Office

Office européen des brevets

(11) Publication number: **0 443 454 A2**

# EUROPEAN PATENT APPLICATION

(21) Application number: 91102167.3

(22) Date of filing: 15.02.91

(51) Int. Cl.⁵: **G02B 6/38, G02B 6/32**

(30) Priority: 20.02.90 IT 1941290

(43) Date of publication of application:
28.08.91 Bulletin 91/35

(84) Designated Contracting States:
**DE ES FR GB**

(71) Applicant: **PIRELLI CAVI S.p.A.**
**Piazzale Cadorna, 5**
**I-20123 Milan(IT)**

(72) Inventor: **Monguzzi, Luigi**
**Via Prealpi, 3**
**Nova Milanese (MI)(IT)**
Inventor: **Moreni, Giancarlo**
**Via Emilio Cecchi, 1**
**Milan(IT)**
Inventor: **Simonelli, Francesco**
**Via Confalonieri, 21**
**Firenze(IT)**

(74) Representative: **Giannesi, Pier Giovanni et al**
**Pirelli S.p.A. Direzione Brevetti Piazzale**
**Cadorna, 5**
**I-20123 Milano(IT)**

(54) **Swivelling optical connector for joining optical fibres to discrete optical components and sensor using one or more optical connectors.**

(57) The invention relates to an optical connector adapted to join an optical fibre to an optical equipment or component (1), comprising an outer support (10, 10') to be fixedly connected to the equipment, provided with a housing (11,11') accommodating a movable element (9) having a spherical-surface portion to which an optical fibre-holding body (7) is connected, the spherical surface of the movable element being in contact with a surface of the outer support mating in adapted to enable the rotation of the element and the body housing the fibre (F) about any axis passing by the centre (C) of the spherical surface itself, tightening means (12, 23) for locking the spherical-surface movable element against the respective housing being present, which means is adapted to cause the rotation of the movable element itself to be prevented by friction; the connector can be made of dielectric materials.

Fig. 3

EP 0 443 454 A2

The invention relates to a swivelling connector for joining optical fibres to discrete optical equipments such as optical sensors, for example.

Optical equipments of various kinds, which will be generally defined in the following as optical sensors for the sake of brevity, are already known, in which light beams are used to carry out different kinds of operations such as detecting the variations that said light beams undergo in the presence of physical outside phenomena, the passage of current for example, thereby obtaining data corresponding to a measurement of the phenomena themselves.

For the purpose one or more light beams are led to the sensor by means of optical fibres which must be connected to the sensor at exact locations of the structure thereof.

Under these situations fibres must be exactly located to the positions they are designed for, in order to make them correctly aligned with the optical paths inside the sensor.

In the case of laboratory equipments the fibres are supported and disposed according to the desired positions and orientations by means of micrometric positioners of general use, adapted to carry out translating or rotating operations on the members they are connected to, by means of graduated scale micrometers through which the desired equipment adjustment is achieved.

Although these embodiments are expensive, bulky and delicate, they are acceptable in a laboratory, in case of equipments designed to carry out particular measurements which are subsequently disassembled for operating in other different configurations due to the fact that they employ separate elements of general use.

If on the contrary equipments intended to be put on the market are made, as well as laboratory equipments for permanent use, the above embodiments are quite unacceptable.

In particular when commercial equipments are concerned, a reduced bulkiness and structures of great solidity are required which cannot be achieved by the use of positioners adapted for laboratories of the above described type.

The industrial production of a sensor intended for commercialisation may have accurately worked parts or housings so as to limit the requirements for position adjustments. However the achievable construction tolerances, in particular in the case of big sized equipments providing optical paths extending some centimetres or decimetres beyond the fibres, cannot avoid an adjustment of the input and output directions of the light beams being necessary in order to achieve the greatest intensity of the optical signals.

In addition, in some applications there is the particular requirement of using sensors in which metal or current conductor components are absent, while said positioners cannot leave out of consideration the use of metal parts, that is parts made of steel or light alloys.

It is therefore necessary to produce optical connectors adapted to join the ends of fibres carrying or receiving the optical signals to the equipment in which said signals are processed, which connectors will enable the required alignments to be accomplished, while avoiding the use of metal materials and bulky and delicate equipments.

Therefore the present invention aims at providing connectors of reduced prices, made of dielectric materials and showing a compact configuration, capable of enabling a quick and steady adjustment of the position and direction of the axis of the optical fibres introduced thereinto.

Consequently it is an object of the present invention to provide a swivelling connector for joining optical fibres to discrete optical equipments, characterized in that it comprises an outer support to be rigidly connected to the equipment, provided with a housing accommodating a movable element having a spherical surface portion to which a fibre-holding body is connected, within which body the end of an optical fibre is engaged, the spherical surface of the movable element being in contact with a mating surface of the outer support, adapted to enable the rotation of the element itself and of the fibre-receiving body about any axis passing by the centre of the spherical surface, means being provided for locking the spherical-surface movable element against the respective housing, which are adapted to cause the rotation of the movable element itself to be prevented by friction.

In one embodiment of the invention the means locking the spherical-surface movable element against the outer support housing comprises a locking nut to be engaged by a respective thread to the outer support, which locking nut has a surface mating the spherical surface of the movable element and in contact therewith, on the opposite side relative to the outer support housing.

Preferably the surface of the housing mating the spherical surface of the movable element is a conical surface the axis of which passes by the centre of said spherical surface and the surface of the locking nut mating the spherical surface of the movable element is a conical surface too, the axis of which passes by the centre of said spherical surface.

In one embodiment of the invention the fibre-holding body within which the optical fibre end is engaged is integral with the spherical-surface element.

The optical fibre end can come out of the body within which it is fixed into a plane passing by the centre of the spherical-surface element; alternatively, a lens may be housed within the spherical-surface movable element, the end of the optical fibre being engaged within the fibre-holding body at a focus of the lens.

In accordance with an alternative embodiment the fibre-holding body within which the optical fibre end is engaged is connected to the spherical-surface element in an axially slidable manner, tightening means for friction locking the body sliding relative to the spherical-surface element being present, and axial displacements of the end position of the optical fibre relative to the lens focus being permitted.

An optical anisotropic element can be engaged within the spherical-surface movable element; the connector can be directed so as to give the right orientation to said component, based on the optical features thereof.

According to an alternative embodiment of the invention which is mechanically and operatively equivalent to the preceding ones, the means locking the spherical-surface movable element against the outer support housing comprises a locking nut to be engaged by a respective thread to a portion of the movable element coaxial with the fibre-holding support, the outer support being provided with a spherical surface concentric with that of the movable element, the locking nut having a surface mating the spherical-surface of the outer support and in contact therewith, on the opposite side relative to the outer support housing.

The swivelling connector in accordance with the invention in anyone of the described or equivalent embodiments can be completely made of dielectric materials.

In particular at least the spherical-surface element, outer support and locking means are made of polymeric materials having high surface hardness and low sliding friction.

The polymeric materials having high surface hardness and low sliding friction comprise acetal resins, epoxy resins and the like, optionally containing mineral fillers.

In the swivelling connector in accordance with the invention adhesive material can be present between the movable element and the housing thereof in the outer body and/or between the fibre-holding body and the spherical-surface movable element, brought to its definite position through relative passages after adjusting the position of the movable element and/or fibre-holding body.

It is a further object of the present invention an optical sensor comprising an element carrying an optical beam from a sensor input position to a sensor output position passing through an operating area inside the sensor, and at least a connector joining an optical input fibre adapted to send an optical beam to the sensor, to an optical output fibre adapted to receive the optical beam coming out of the sensor, characterized in that at least one of the connectors can be angularly oriented and comprises an outer support fastened to the sensor having a housing within which a movable element is received which is provided with a spherical-surface portion in contact with the housing and rotatable, in contact with the housing itself, about any axis passing by the centre of the spherical surface to which a fibre-holding body housing the end of an optical fibre is connected, tightening means for locking the spherical surface of the movable element against the respective housing in the outer support and adapted to frictionally prevent the movable element from rotating being present.

The angularly-oriented swivelling connector or each of the angularly-oriented swivelling connectors in the sensor are made in accordance with the previously described features.

The optical sensor in accordance with the invention can be completely made of dielectric materials.

More details will be drawn from the following description of the invention made with reference to the accompanying drawings, in which:

- Fig. 1     is a general diagram of an optical measurement equipment provided with connectors for joining optical fibres:

- Fig. 2     is an axial sectional view of a swivelling connector joining one optical fibre to an equipment of the type shown in Fig. 1;

- Fig. 3     shows the connector of Fig. 2 in an angularly oriented position;

- Fig. 4     shows an alternative embodiment of a swivelling connector;

- Fig. 5     shows an alternative embodiment of a swivelling connector;

- Fig. 6     is a further embodiment of the swivelling connector;

- Fig. 7     shows the swivelling connector of fig. 6 in an angularly oriented position;

- Fig. 8     is a perspective view of an optical measurement equipment provided with swivelling connectors in accordance with the invention;

- Fig. 9     shows the equipment of Fig. 8 seen in section according to a horizontal plane containing the axis of the connectors.

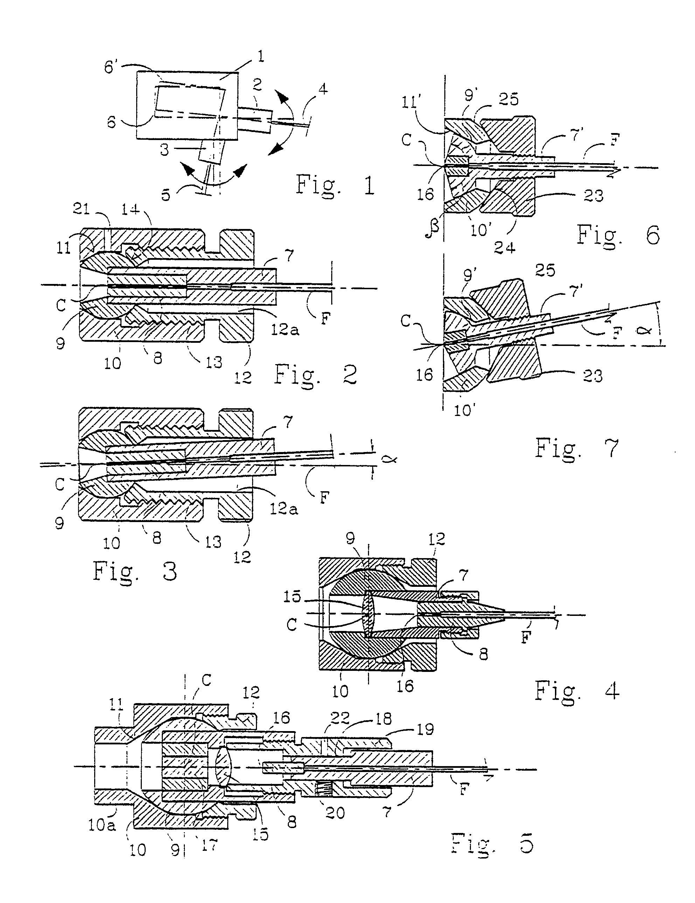

As shown in Fig. 1, a discrete optical equipment generally referred to as optical sensor in the following, has a body 1 to which at least two connectors 2, 3 for optical fibres 4, 5 are joined, respectively at the input and output of optical beams carried by the fibres themselves, which beams describe a particular path 6 within the sensor diagrammatically shown in the figure by a chain dot line, as a result for example of multiple reflections inside the body 1 itself.

Due to unavoidable construction tolerances, in particular if the sensor body is of big sizes, the optical path at the inside of the body can have small variations which cause the output position and direction of the beam not to be coincident with the optical axis of the respective connector and the fibre connected thereto, giving rise to a partial light loss.

In the above cases, even if very reduced construction tolerances are imposed, position shiftings inevitably occur in the light beams on the order of some fractions of millimetre or some degrees and it is necessary to carry out an orientation of the input and output connectors so as to achieve the maximum light intensity for the beam.

For example, as diagrammatically shown in Fig. 1, an optical beam admitted by the connector 2 into the sensor body 1 and guided inside it over the path 6, at the output can have a different location than that of the optical axis of the connector 3 and related fibre 5; under these conditions the equipment setting-up can involve an orientation of the connector 2 so as to bring the outgoing optical beam to the provided position, corresponding to connector 3, following path 6'; the connector 3, in turn, must be oriented so as to make the output direction of the beam coincident with the optical axis thereof so that no losses in the signal take place.

For the purpose, in accordance with the present invention a swivelling connector is provided, some embodiments of which are shown in Figs. 2, 4, 5, 6, which is of compact structure and quick adjustment.

The connector in general comprises a fibre-holding body 7, inside which a ferrule 8 is housed to which an optical fibre 7 is connected, which body 7 is integral with a movable element 9 having a surface portion of spherical form which has its centre at C.

Element 9 in turn is received in an outer support 10 having a housing 11 mating the spherical surface of the element itself; conveniently the housing 11 has a conical or spherical surface with a radius equal to or greater than the radius of the movable-element spherical surface.

The movable element 9 is kept in contact with the housing 11 by locking means, conveniently of the threaded type, which can be unloosed to enable the rotation of the movable element of the fibre-holding body integral therewith about any axis passing by the centre of its spherical surface, and can be tightened as far as they prevent said rotation as a result of the friction between the spherical surface and the housing.

In one embodiment, some alternative forms of which are shown in Figs. 2, 4, 5, the locking means comprises a locking nut 12 to be tightened by means of a respective thread 13 in engagement with the outer support 10 and acting on the movable element 9 by its contact surface 14 mating the spherical surface of the movable element 9 itself.

Conveniently surface 14 is of conical form, its axis passing by the centre of the spherical surface 9 and being coaxial with the axis of the housing 11 surface; alternatively, for example, the surface 14 can be of spherical form, its radius being the same as or greater than the radius of the spherical surface of the movable element 9, so that it is in contact with the spherical surface along a complete circle.

The described structure enables the assembly consisting of the body 7 and spherical element 9 to be oriented, as shown in Fig. 3 for example, through an angle α sufficient to achieve the desired alignment, when the locking nut 12 is kept unloosed, whereas the rotation of the element 9 can be prevented by friction, after carrying out the orientation, by tightening the locking nut 12 itself.

As shown in Figs. 2, 3, the maximum amplitude of the angular orienting range depends on the diameter of the inner hole 12a of the locking nut 12.

The orienting operations of the body 7 and the tightening operations of the locking nut 12 can be in most cases carried out by hand, with the aid of detectors for the light intensity of the outgoing beam or the like; the more or less stressed tightening of the locking nut 12 in fact enables the most appropriate resistance to rotation of the body 7 to be generated by friction in order to achieve the required accuracy in the body inclination by manually acting on the fibre-holding body 7.

Should a still more precise adjustment be needed, the body 7 could be connected to a micrometric positioner of a type well known in the field, through which the body 7 can be oriented being then locked to the exact position by the locking nut, the positioner being afterwards removed.

Fig. 4 illustrates a preferred embodiment of the invention in which a lens 15 is provided inside the spherical element 9, the centre of which is coincident with the centre C of the spherical surface of element 9 and which is adapted to focalise a light beam at the output end 16 of fibre F from the ferrule 8.

By virtue of this embodiment it is possible to have a beam coming out of the connector which is collimated according to the orientation axis of the body 7 or to send a connector input beam to the fibre, and the embodiment is particularly appropriate for applications in the field of optical sensors.

Fig. 5 shows a further alternative embodiment of the invention, in which at the rotation centre C of the spherical element 9 an optical component 17 is provided.

If the component 17 is an anisotropic element, such as a polariser, a delay plate or the like, the connector of the invention can enable the alignment with other components of the system to be carried out.

This alignment which can provide a rotation according to one or more of the three space axes passing by the centre of the component, can easily be accomplished through the spherical element 9 and the achieved position can then be readily locked by the locking nut 12.

In addition to component 9 it is possible to provide the presence of the lens 15, of an appropriate focal length, as previously described.

The embodiment shown in Fig. 5 also provides for the body 7 accommodating the ferrule 8 and optical fibre F to be axially shifted relative to the spherical element 9 and, in particular, to the lens 15 integral therewith.

By virtue of the foregoing it is for example possible to alter the distance between the lens 15 and the end 16 of the fibre F coming out of the ferrule 8, so as to obtain collimated converging or diverging beams according to requirements.

To this end the fibre-holding body 7 is slidably received within the hole 18 of a bush 19, in turn integral with the spherical element 9; a grub screw 20 or similar friction locking means, enables the axial sliding of body 7 to be prevented once the desired axial distance has been found either by hand or through micrometric positioners.

This feature, as is apparent to a technician, is independent of the presence of the optical component 17 and also of lens 15 and therefore the described structure can also be present in a connector in accordance with the embodiment shown in Fig. 4 or 3.

The outer support 10 and, if present, the bush 19 conveniently have holes 21, 22 into which an adhesive material can be introduced, after carrying out the appropriate adjustments, for the final locking of the connector to the selected position.

Figs. 6, 7 show a further alternative embodiment equivalent to the preceding ones, in which in order to achieve a high axial compactness and to dispose the outgoing end 16 of the fibre F into the connector in coincidence with the centre C of rotation of the spherical element 9', or also ahead thereof, said spherical element is in the form of a sector of a circle included in a solid angle $\beta$ smaller than 180°, ad is housed within an outer support 10' the bearing surface 11' of which mating that of the spherical element being for example of conical form; a fibre-holding body 7' is connected to the element 9' either fixedly or slidably, as shown in Fig. 5.

Therefore a locking nut 23 is screwed down either directly into the fibre-holding body 7', if the latter is integral with the spherical element 9' as shown, or into an extension of the element 9' within which the body 7' is contained; said locking nut 23 has a housing 24, for example of conical surface, resting on the outer surface 25 of the outer support 10', which is of spherical form and is concentric with the spherical surface of the element 9'.

The tightening of the locking nut 23 enables the rotation of the spherical element 9' to be prevented by friction in the same manner as illustrated in the previously described embodiments.

In all of the embodiments shown the fastening of the connector to the equipment for which it is intended can be carried out through the outer support 10 or 10'; for example, in the embodiment shown in Fig. 5 the outer support has a substantially cylindrical outer surface and exhibits a front portion 10a of cylindrical form too and of reduced diameter, adapted to be introduced into a respective housing present in the equipment and locked thereto, for example by means of a grub screw or the like.

Alternatively, any other fastening means such as for example a flanged or threaded attachment, can be employed, based on the features and the materials used for making the connector and the equipment it is intended for.

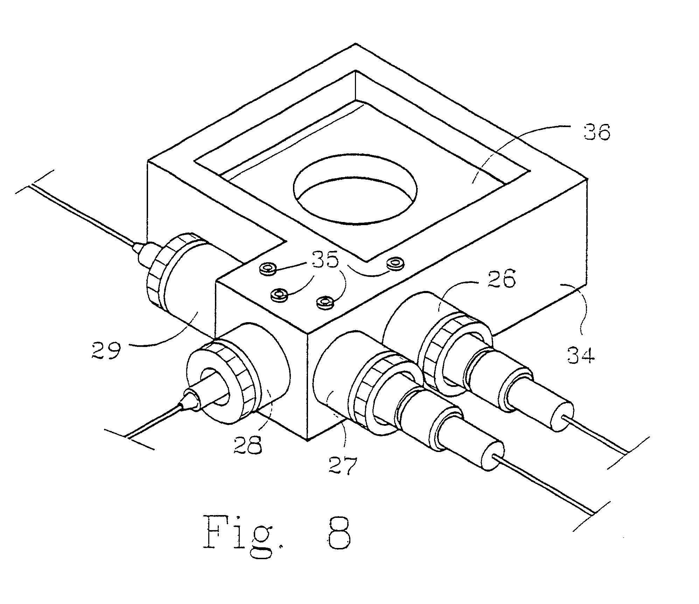

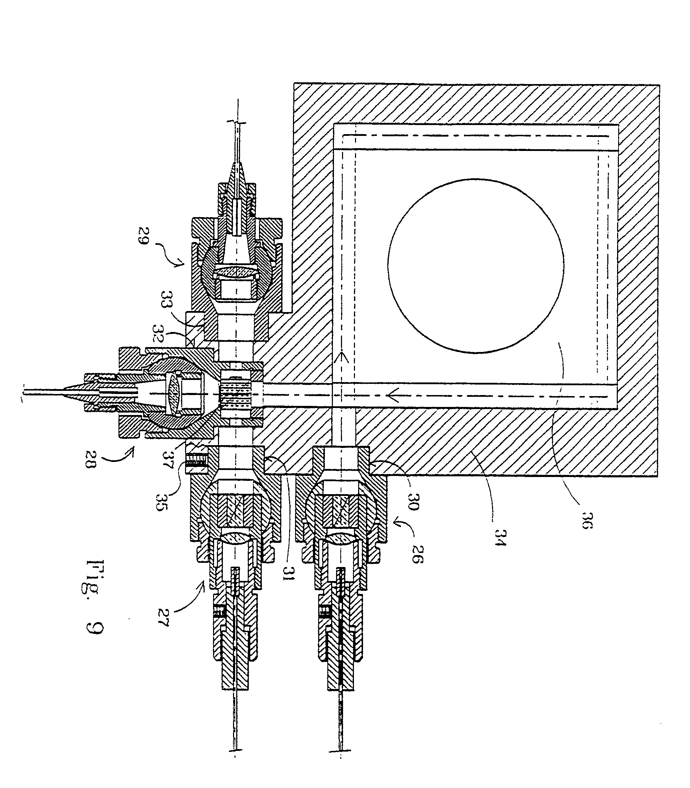

Figs. 8, 9 show an exemplificative application of the connectors in accordance with the invention in a polarimetric current sensor.

In the equipment shown the input connectors 26, 27 for the optical measurement beam and optical reference beam respectively and output connectors 28, 29, are introduced into respective housings 30, 31, 32, 33 in the sensor body 34, and held therein by means of grub screws 35.

As shown in Figs. 8, 9 connectors of the type shown in Fig. 4 and in Fig. 5 are present; integral with the outer support of connector 28 is a polarisation divider, based upon the operating features of the specific equipment represented which is, as said, a polarimetric current sensor known per se, for example from the Italian patent application No. 22041 A/89 and therefore not described in greater detail; its orientation can be adjusted by rotating the whole connector within its housing, without the possibilities of orientation of the fibre within the connector itself being restrained thereby.

In order to obviate the construction tolerances of the reflection planes in the luminous guide element 36 housed within the body 34, determining the optical paths in the sensor represented in chain dot line in the figure, during the equipment assembling step the connectors thus mounted are oriented each following the modalities previously described; to this end it is possible to proceed for example with sending a beam to a fibre joined to an input connector and observing the intensity of the beam at the respective output connector so as to orient the fibre-holding body 7 of the input connector as far as a maximum beam at the output substantially corresponding to the arrival of the beam at the core of the fibre carried by the output connector is achieved, then tightening the respective locking nut to the obtained position.

Subsequently, still observing the beam intensity in the fibre joined to the output connector, the orientation of the latter is carried out, looking for a new maximum intensity of the outgoing beam greater than the preceding one and corresponding to the correct angular alignment between the axis of the outgoing beam and the axis of the fibre designed to receive it.

After the desired positions have been reached, the connectors are locked to the respective locations by introducing adhesive material or the like into the same through the respective holes, so that the connector positions become steady also in the presence of vibrations, accidental loosening of the respective locking nuts or the like which may take place during the use of the equipment.

Based upon requirements, the connectors in accordance with the invention can be made of metal materials, such as for example steel or light alloys, or of polymeric materials.

The use of polymeric materials that can be applied to all of the connector components, optionally except the optical elements such as lenses, polarisators and the like, which at all events can be made of non metallic materials, enables the whole sensor to be formed with dielectric materials, if necessary, both as regards its body 34 and the connectors, which feature is highly desirable for equipments designed to be applied close to high voltages for example, where traditional positioners for which the use of at least some non-metallic components is required, give rise to great difficulties in application.

The polymeric materials adapted for the purpose, in particular for making the spherical element 9 or 9' and the parts provided with the contact housings for said spherical element, in particular the outer support 10 or 10' and locking nut 12 or 23, conveniently are low-friction and high surface-hardness materials, capable of sliding on each other in a regular manner and without giving rise to jamming or local deformation phenomena; for example adapted materials can be acetal resins, epoxy resins added with mineral fillers, fluorinated resins and the like.

Many modifications can be made without departing from the scope of the present invention as regards the general features thereof.

## Claims

1. A swivelling connector for joining optical fibres to discrete optical equipments (1), characterized in that it comprises an outer support (10) to be rigidly connected to the equipment (1), provided with a housing (11, 11') accommodating a movable element (9) having a spherical surface portion to which a fibre-holding body (7) is connected, within which body the end of an optical fibre (F) is engaged, the spherical surface of the movable element (9) being in contact with a mating surface of the outer support (10), adapted to enable the rotation of the element (9) itself and of the fibre-receiving body (7) about any axis passing by the centre (C) of the spherical surface, tightening means (12, 23) being provided for locking the spherical-surface movable element (9) against the respective housing (11, 11'), which are adapted to cause the rotation of the movable element itself to be prevented by friction.

2. A swivelling connector for optical fibres according to claim 1, characterized in that the tightening means (12, 23) for locking the spherical-surface movable element (9) against the housing (11) in the outer support (10) comprises a locking nut (12) to be engaged by a respective thread to the outer support, which locking nut has a surface mating the spherical surface of the movable element and in contact therewith, on the opposite side relative to the housing in the outer support.

3. A swivelling connector for optical fibres according to claim 1, characterized in that the surface of the housing (11) mating the spherical surface of the movable element (9) is a conical surface the axis of which passes by the centre (C) of said spherical surface.

4. A swivelling connector for optical fibres according to claim 2, characterized in that the surface of the locking nut (12) mating the spherical surface of the movable element is a conical surface, the axis of which passes by the centre (C) of said spherical surface.

5. A swivelling connector for optical fibres according to claim 1, characterized in that the fibre-holding body (7) within which the optical fibre end is engaged is integral with the spherical-surface element (9).

6. A swivelling connector for optical fibres according to claim 5, characterized in that the optical fibre end comes out of the body (7) within which it is fixed into a plane passing by the centre (C) of the spherical-surface element.

7. A swivelling connector for optical fibres according to claim 1, characterized in that a lens (15) is housed within the spherical-surface movable element (9), the end of the optical fibre (F) being engaged within the fibre-holding body (7) at a focus of the lens.

8. A swivelling connector for optical fibres according to claim 7, characterized in that the fibre-holding body (7) within which the optical fibre end is engaged is connected to the spherical-surface element (9) in an axially slidable manner, locking tightening means (20) being present for preventing the body (7) to slide relative to the spherical-surface element (9, 19) by friction, axial shiftings of the end position of the optical fibre relative to the lens focus being permitted.

9. A swivelling connector for optical fibres according to claim 1, characterized in that an optical anisotropic element (17) is engaged within the spherical-surface movable element (9).

10. A swivelling connector for optical fibres according to claim 1, characterized in that the tightening means (23) locking the spherical-surface movable element (9) against the outer support housing (11') comprises a locking nut (23) to be engaged by a respective thread to the portion of the movable element (9'), coaxial with the fibre-holding support (7'), the outer support (10') being provided with a spherical surface (25) concentric with that of the movable element (9'), the locking nut having a surface (24) mating the spherical surface (25) of the outer support (10') and in contact therewith, on the opposite side relative to the outer support housing (11').

11. A swivelling connector for optical fibres according to claim 1, characterized in that it is completely made of dielectric materials.

12. A swivelling connector for optical fibres according to claim 11, characterized in that at least the spherical-surface element (9, 9'), outer support (10, 10') and tightening means (12, 23) are made of polymeric materials having high surface hardness and low sliding friction.

13. A swivelling connector for optical fibres according to claim 12, characterized in that the polymeric materials having high surface hardness and low sliding friction comprise acetal resins, epoxy resins and the like, optionally containing mineral fillers.

14. A swivelling connector for optical fibres according to one or more of the preceding claims, characterized in that adhesive material is present between the movable element (9) and the housing thereof in the outer body (10, 10') and/or between the fibre-holding body (7) and the spherical-surface movable element (9), brought to its final position through relative passages (22) after the position of the movable element and/or fibre-holding body has been adjusted.

15. An optical sensor (1) comprising a carrying element for an optical beam from a sensor input position to a sensor output position, passing through an operating area inside the sensor, and at least a connector (2, 3) joining an input optical fibre (4) adapted to send an optical beam to the sensor, to an output optical fibre (5) adapted to receive the optical beam coming out of the sensor, characterized in that at least one of the connectors can be angularly oriented and comprises an outer support (10, 10') fastened to the sensor having a housing (11, 11') within which a movable element (9) is received which is provided with a spherical-surface portion in contact with the housing and rotatable, in contact with the housing itself, about any axis passing by the centre of the spherical surface to which a fibre-holding body (7, 7') housing the end of an optical fibre (F) is connected, tightening means (12, 23) for locking the spherical surface of the movable element against the respective housing in the outer support and adapted to frictionally prevent the movable element from rotating being present.

16. An optical sensor according to claim 15, characterized in that the angularly-oriented swivelling connector or each of the angularly-oriented swivelling connectors in the sensor are made in accordance with one of the claims 2 to 14.

17. An optical sensor according to claim 15, characterized in that it is completely made of dielectric materials.

Fig. 1

Fig. 2

Fig. 3

Fig. 4

Fig. 5

Fig. 6

Fig. 7

Fig. 8

Fig. 9